(19) Europäisches Patentamt

European Patent Office

Office européen des brevets

(11) **EP 0 892 279 A2**

(12) **EUROPÄISCHE PATENTANMELDUNG**

(43) Veröffentlichungstag:
20.01.1999 Patentblatt 1999/03

(51) Int. Cl.⁶: **G01S 7/285**

(21) Anmeldenummer: 98440155.4

(22) Anmeldetag: 16.07.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: 16.07.1997 DE 19730437

(71) Anmelder:
**Alcatel Alsthom Compagnie Generale d'Electricité**
**75088 Paris (FR)**

(72) Erfinder: **Pabel, Klaus**
**71732 Tamm (DE)**

(74) Vertreter:
**Brose, Gerhard, Dipl.-Ing. et al**
**Alcatel Alsthom**
**Intellectual Property Department,**
**Postfach 30 09 29**
**70449 Stuttgart (DE)**

(54) **Verfahren und Vorrichtung zur Verbesserung des Signal-zu-Rausch- Verhältnisses im Hörtorkanal von Pulsdopplerradargeräten**

(57)     Die Erfindung betrifft ein Verfahren und eine Vorrichtung zur Verbesserung des Signal-zu-Rausch-Verhältnisses (S/N) im Hörtorkanal (2) von Puls-Doppler-Radargeräten, wobei der Hörtorkanal (2) von einem digitalisierten Eingangssignal eines Videokanals (I oder Q) eines Detektionskanals (1) des Radargerätes abge-zweigt wird. Erfindungsgemäß ist vorgesehen, daß das abgezweigte Signal des Hörtorkanals (2) mit einem zum Signalverarbeitungsgewinn modifizierten Signal des Detektionskanals (1) verknüpft wird.

Fig.2

EP 0 892 279 A2

**Beschreibung**

Die Erfindung betrifft ein Verfahren zur Verbesserung des Signal-zu-Rausch-Verhältnisses (S/N) im Hörtorkanal von Puls-Doppler-Radargeräten gemäß dem Oberbegriff des Anspruchs 1 sowie eine entsprechende Vorrichtung gemäß dem Oberbegriff des Anspruchs 6.

Bei Puls-Doppler-Radargeräten befindet sich die abgestrahlte Sendekeule für mehrere Sende-Empfangsperioden auf einem zu detektierenden Ziel. Aufgrund des Phasenunterschiedes zwischen aufeinanderfolgenden Empfangsperioden entsteht bei einem sich bewegenden Ziel eine Wechselspannung, die im Detektionskanal des Radarempfängers ausgewertet wird. Parallel zu dieser Zieldetektion besteht bei vielen Puls-Doppler-Radargeräten die Möglichkeit, sich den Dopplerton aus einer ausgewählten Entfernungszelle zur Zielklassifizierung anzuhören. Dazu wird ein Hörtorkanal von einem der beiden Videokanäle (I oder Q) des Detektionskanals abgezweigt, über ein Band- oder Hochpaßfilter geschickt und akustisch ausgegeben. Die Bandbreite des Hörtorfilters wird vom Bediener gewählt. Da in der Regel die spektrale Lage des Dopplertones nicht bekannt ist, muß der Bediener ein breitbandiges Hörtorfilter auswählen, um Informationsverlust zu vermeiden. Bei breitbandigem Hörtorkanal ist jedoch nur sehr wenig Signalverarbeitungsgewinn vorhanden, so daß der Dopplerton, insbesondere bei schwachen Signalen, stark vom Empfängerrauschen überlagert ist. Folglich ist eine akustische Klassifizierung des Signals mit erheblichen Schwierigkeiten verbunden.

Die Aufgabe der Erfindung besteht in der Verbesserung des Signal-zu-Rausch-Verhältnisses (S/N) im Hörtorkanal von Puls-Doppler-Radargeräten.

Diese Aufgabe wird verfahrensgemäß mit den kennzeichnenden Merkmalen des Patentanspruches 1 und vorrichtungsgemäß mit den kennzeichnenden Merkmalen des Anspruches 6 gelöst. Das Prinzip der Lösung besteht darin, den im Detektionskanal entstehenden Signalverarbeitungsgewinn im Hörtorzweig auszunutzen. Dazu wird das zum Signalverarbeitungsgewinn modifizierte Signal des Detektionskanals quasi dem Hörtorkanal überlagert.

Anspruch 2 zeigt eine Möglichkeit auf, ein derartiges zum Signalverarbeitungsgewinn modifiziertes Signal des Detektionskanals zu erzeugen. Um sehr empfindliche Signalverarbeitungen zu realisieren, wird der Dopplerspektralbereich in schmalbandige Filterbereiche aufgeteilt; Diese Filterbereiche werden in der Regel durch eine blockweise abgearbeitete FFT (Fast-Fourier-Transformation) realisiert. Entsprechend der FFT-Blocklänge ergibt sich ein Signalverarbeitungsgewinn gegenüber einer breitbandigen Hochpaßfilterung des Empfangssignals. Eine weitere Verbesserung des Signal-zu-Rausch-Verhältnisses um ca. 3dB ist durch die Zusammenfassung der komplexen Spektralanteile zum Leistungsspektrum erreichbar. Befindet sich die abgestrahlte Sendekeule über den Zeitraum mehrerer FFT-Blocklängen auf dem Ziel, können die, bei jeder FFT gebildeten einzelnen Leistungsspektren Spektralwert für Spektralwert über die Zeit, für die die Antenne in Richtung des zu detektierenden Zieles zeigt, aufsummiert bzw. integriert werden. Dies geschieht in der Regel durch ein gleitendes zeitliches Fenster. Durch diese Integration erhält man vor der dann folgenden Zieldetektion einen weiteren Signalverarbeitungsgewinn, der die Empfindlichkeit des Empfängers zusätzlich verbessert. Bei einer FFT-Blocklänge von 256 Werten, einer Zusammenfassung zum Leistungsspektrum und anschließender Nachintegration über vier aufeinanderfolgende FFT-Blöcke entsteht beispielsweise ein Signalverarbeitungsgewinn von ca. 25 dB.

Vorzugsweise wird die Verknüpfung gemäß Anspruch 3 durch Faltung der in den Frequenzbereich transferierten Signale des Detektionskanals und des Hörtorkanals realisiert.

Dabei kann die Faltung gemäß Anspruch 4 zwischen dem symmetrierten und skalierten Frequenzvektor des Detektionskanals und einem ebenfalls mittels FFT gebildeten Frequenzvektor des Hörtorkanals erfolgen. Da das Spektrum im Hörtorkanal nicht komplex ist, muß das unsymmetrische Leistungsspektrum des Detektionskanals vor der Verknüpfung der beiden Kanäle zunächst symmetriert werden.

Nach der Verknüpfung mittels Faltung respektive vektorieller Multiplikation respektive Überlagerung der beiden Frequenzvektoren wird das Signal des Hörtorkanals nach Anspruch 5 mittels einer inversen Fast-Fourier Transformation (IFFT) zurück in den Zeitbereich gebracht.

Anspruch 6 charakterisiert eine Vorrichtung, durch die sich eine Verbesserung des Signal-zu-Rausch-Verhältnisses (S/N) im Hörtorkanal von Puls-Doppler-Radargeräten ergibt. Vorgesehen ist eine Verknüpfungseinrichtung, welche den Signalverarbeitungsgewinn im Detektionskanal dem Hörtorkanal quasi überlagert. Der Signolverarbeitungsgewinn wird durch Einrichtungen zur Fast-FourierTransformation (FFT) und zur Bildung des Leistungsspektrums erreicht.

Die Signalaufbereitung kann dabei gemäß Anspruch 7 erfolgen. Die unterschiedliche Struktur der zu verknüpfenden Vektoren wird auf diese Art und Weise vereinheitlicht.

Zur weiteren Erhöhung des Signalverarbeitungsgewinns im Detektionskanal und damit auch zur S/N-Verbesserung im Hörtorkanal kann nach Anspruch 8 zusätzlich eine Integrationseinrichtung vorgesehen sein. Diese bildet ein Gesamtsignal aus n Pulsen bzw. FFT-Blocklängen, während der die Antennenkeule auf das zu detektierende Ziel gerichtet ist.

Zusätzlich kann zur weiteren Fehlervermeidung entsprechend Anspruch 9 eine Einrichtung zur Beaufschlagung des FFT-Einganssignals mit einer Wichtungsfunktion vorgesehen sein. Damit ist eine Reduktion spektraler Nebenzipfel beabsichtigt.

Die Einrichtung zur inversen Fast-Fourier-Transformation (IFFT) gemäß Anspruch 10 ermöglicht eine Rücktransformation des verbesserten Dopplertonsignals in den Zeitbereich.

Anspruch 11 charakterisiert eine vorteilhafte Ausführungsform mit eingangs- und ausgangsseitig des Hörtorkanals angeordneten Wechselpufferspeichern. Die beiden Hälften des Speichers werden abwechselnd zur Ein- bzw. Ausgabe des Signals benutzt. Der n-te FFT-Block wird eingeschrieben, während die Werte des zeitlich vorherigen n-1 -ten FFT-Blocks ausgegeben werden. Analog werden die verarbeiteten Signale des Blockes n-2 ausgangsseitig synchron im Takt der Sendepulse ausgegeben.

Die Erfindung wird nachfolgend anhand figürlicher Darstellungen näher erläutert. Es zeigen:

Figur 1 ein Blockschaltbild eines Puls-Doppler-Radargerätes mit Hörtorkanal bekannter Bauweise,

Figur 2 den Aufbau nach Anspruch 1 ergänzende Einrichtungen zur S/N-Verbesserung und

Figur 3 den Einrichtungen der Figur 2 zugeordnete Signalverläufe.

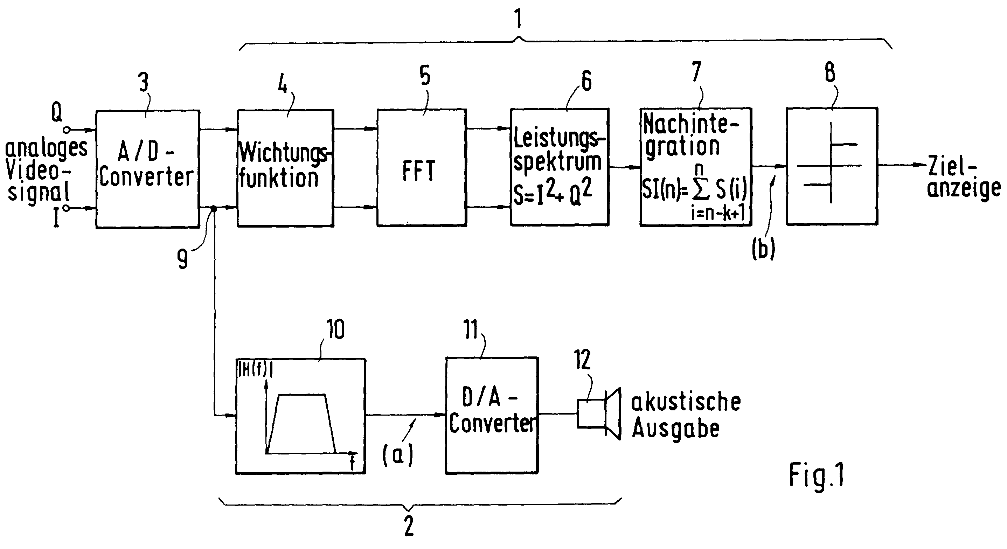

Figur 1 zeigt ein Blockschaltbild der Signalverarbeitung eines Puls-Dappler-Radargerätes` wobei neben einem Detektionskanal 1 zur Zielanzeige zusätzlich ein Hörtorkanal 2 zur akustischen Zielklassifizierung vorgesehen ist. Ein empfangenes analoges Videosignal mit den Eingangssignalen I und Q wird zunächst einem A/D-Wandler 3 zugeführt. Das digitalisierte Signal wird in eine bestimmte Anzahl von Detektionkanälen eingespeist. Jeder Detektionskanal ist dabei für eine Entfernungszelle vorgesehen. Dargestellt ist ein Detektionskanal 1, der im wesentlichen als Reihenschaltung, bestehend aus Einrichtungen zur Beaufschlagung mit einer Wichtungsfunktion 4, zur Fast-Fourier-Transformation 5, zur Bildung des Leistungsspektrums 6, zur Nachintegration 7und einer Schwellwertschaltung 8 besteht. Der Hörtorkanal 2 ist von einem der digitalisierten Eingangssignale I bzw. Q abgezweigt. Dem Verzeigungspunkt 9 sind im Hörtorkanal 2 ein Hoch- oder Bandpaßfilter 10, ein D/A-Wandler 11 und ein Lautsprecher 12 nachgeschaltet. Der im Detektionskanal 1 durch die FFT 5, die Bildung des Leistungsspektrums 6 und die Nachintegration 7 entstandene Signalverarbeitungsgewinn kommt bei diesem bekannten Aufbau nicht zum Tragen. Folglich ist der Dopplerton stark vom Empföngerrauschen überlagert und vom Bediener nur schwer klassifizierbar.

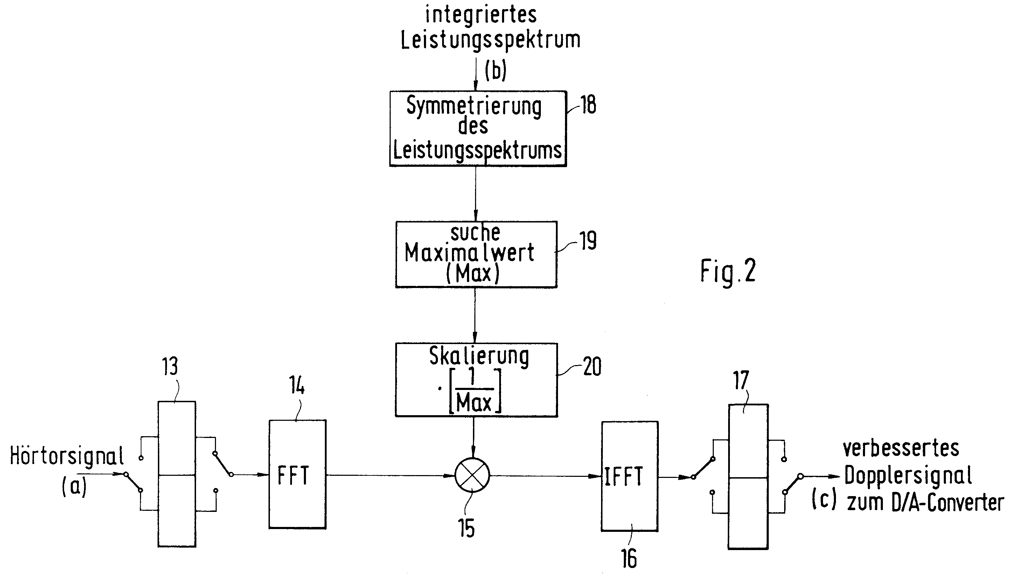

Das nachfolgend beschriebene Verfahren nutzt den im Detektionskanal 1 angesammelten Signalverarbeitungsgewinn aus, um das Dopplertonsignal im Hörtorkanal (2) zu verbessern. Die Verfahrensschritte veranschaulicht Figur 2 in einem Blockdiagramm. Als Eingänge zur Verbesserung des Signal-zu-Rausch-Verhältnisses S/N im Hörtorkanal 2 dient einerseits das gefilterte Dopplertonsignal a (Figur 1) und andererseits das integrierte Leistungsspektrum b (Figur 1) des Detektionskanals 1. Das Ausgangssignal bildet das verbesserte Dopplertonsignal c. Das in jeder Empfangsperiode anstehende Dopplertonsignal am Eingang a wird sukzessive in einen Teil eines ersten Wechselpufferspeichers 13 geschrieben. Während in die eine Hälfte des Wechselpufferspeichers 13 neue Signalwerte aus der n-ten Empfangsperiode eingeschrieben werden, werden die Werte der n-1 -ten Empfangsperiode verarbeitet. Zur Verarbeitung ist eine zweite Einrichtung 14 zur Fast-Fourier-Transformation (FFT) vorgesehen, die die Dopplertonsignale in den Frequenzbereich überführt. Im Frequenzbereich wird mittels einer Verknüpfungseinrichtung 15, das Produkt aus den von den Eingängen a und b abgeleiteten Frequenzvektoren gebildet. Das Ausgangssignal der Verknüpfungseinrichtung 15 wird mit einer Einrichtung 16 zur inversen Fast-Fourier-Transformation (IFFT) zurück in den Zeitbereich gebracht und in einem zweiten Wechselpufferspeicher 17 abgelegt. Die beiden Wechselpufferspeicher 13 und 17 sind jeweils für eine Speicherkapazität ausgelegt, die der doppelten FFT-Blocklänge entspricht. Aus dem jeweils anderen Teil des zweiten Wechselpufferspeichers 17 werden die verarbeiteten Dopplertonsignale der n-2-ten Transformationsblockperiode im Puls-Takt des Puls-Doppler-Radargerätes ausgegeben. Da das Spektrum im Hörtorkanal 2 nicht komplex ist, muß das Leistungsspektrum des Detektionskanals 1 vor der Verknüpfung im Frequenzbereich symmetriert werden. Dazu wird das Signal am Eingang b Einrichtungen 18 und 19 zur Symmetrierung des Leistungsspektrums und zur Maximalwertsuche (Max) sowie einer Skalierungseinrichtung 20 ([1/Max]) zugeführt.

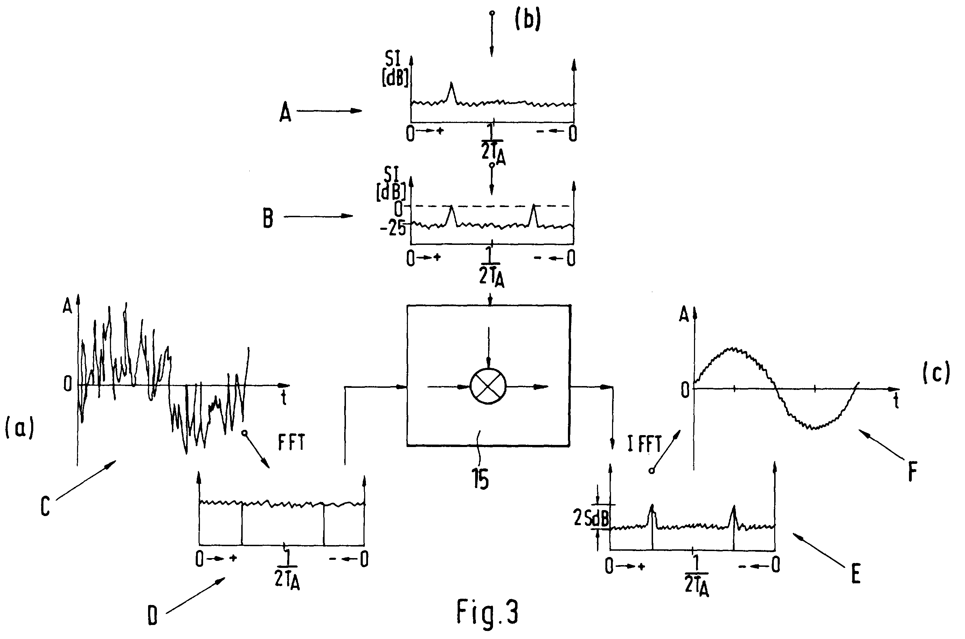

Figur 3 zeigt Signalverläufe eingangsseitig - a und b - und ausgangsseitig - c - der Verknüpfungseinrichtung 15. Es ist ersichtlich, daß das von dem Detektionskanal 1 abgezweigte integrierte Leistungsspektrum A zunächst symmetriert und skaliert wird B, bevor eine Überlagerung nach Art einer vektoriellen Faltung mit dem vom Zeitsignal C am Eingang a des Hönorkanals 2 mittels FFT in den Frequenrbereich überführten Leistungsspektrum D des Dopplertones möglich ist. Der Signalverlauf E am Ausgang der Verknüpfungseinrichtung 15 zeigt die Charakteristika der beiden Eingangsvektoren B und D. Nach der Rückübertragung in den Zeitbereich mittels inverser Fast-Fourier-Transformation (IFFT) entsteht der mit F gekennzeichnete Signalverlauf. Dieser Signalverlauf F unterscheidet sich augenscheinlich von dem Signalverlauf C am Eingang a dadurch, daß die Rauschanteile um das im Detektionskanal 1 zugenommene S/N reduziert sind.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen. Insbesondere beschränkt sich die Erfindung nicht auf die Realisierbarkeit mittels der blockschematisch dargestellten Baugruppen, sondern ist vorteilhaft mittels integrierter Logik umsetzbar.

**Patentansprüche**

1. Verfahren zur Verbesserung des Signal-zu-Rausch-Verhältnisses (S/N) im Hörtorkanal (2) von Puls-Doppler-Radargeräten, wobei der Hörtorkanal (2) von einem digitalisierten Eingangssignal eines Videokanals (I oder Q) eines Detektionskanals (1) des Radargerätes abgezweigt wird,
dadurch gekennzeichnet, daß
das abgezweigte Signal des Hörtorkanals (2) mit einem zum Signalverarbeitungsgewinn modifzierten Signal des Detektionskanals (1) verknüpft wird.

2. Verfahren nach Anspruch 1, dadurch gekennzeichnet, daß das zum Signalverarbeitungsgewinn modifizierte Signal des Detektionskanals (1) durch Bildung eines Frequenzvektors mittels

- Fast-Fourier-Transformation (FFT) (5) des mit einer Wichtungsfunktion (4) zur Reduktion spektraler Nebenzipfel beaufschlagten digitalisierten Eingangssignals (I und Q)
- Zusammenfassung komplexer Spektralanteile zu einem Leistungsspektrum ($S = I^2 + Q^2$) (6) und
- Nachintegration

$$(SI(n) = \sum_{i=1}^{n} S(i))$$

erzeugt wird.

3. Verfahren noch einem der vorangehenden Ansprüche, dadurch gekennzeichnet, daß die Verknüpfung durch Bildung des Faltungsproduktes aus vom Detektionskanal (1) und vom Hörtorkanal (2) abgeleiteten Signalen im Frequenzbereich erfolgt.

4. Verfahren nach Anspruch 3, dadurch gekennzeichnet, daß die Verknüpfung durch Bildung des Faltungspproduktes aus dem symmetrierten und skalierten Frequenzvektor (B) des Detektionskanals (1) und einem mittels Fast-Fourier-Transformation (FFT) gebildeten Frequenzvektor (D) des Hörtorkanals (2) erfolgt.

5. Verfahren nach Anspruch 4, dadurch gekennzeichnet, daß das als Faltungsprodukt gebildete Signal (E) mittels inverser Fast-FourierTransformation (IFFT) von dem Frequenzbereich in den Zeitbereich rückübertragen (F) und analogisiert wird.

6. Vorrichtung zur Verbesserung des Signal-zu-Rausch-Verhältnisses (S/N) im Hörtorkanal (2) von Puls-Doppler-Radargeräten, wobei der Hörtorkanal (2) von einem digitalisierten Eingangssignal eines Videokanals (I oder Q) eines Detektionskanals (1) des Radargerätes abgezweigt ist, dadurch gekennzeichnet, daß eine Verknüpfungseinrichtung (15) vorgesehen ist, die das Faltungsprodukt aus dem mittels einer ersten Einrichtung (5) zur Fast-Fourier-Transformation (FFT) in den Frequenzbereich überführten und mittels einer Einrichtung (6) zur Bildung eines Leistungsspektrums ($S = I^2 + Q^2$) modifizierten Signal des Detektionskanals (1) und dem mittels einer zweiten Einrichtung (14) zur Fast-Fourier-Transformation (FFT) in den Frequenzbereich überführten Signal des Hörtorkanals (2) bildet.

7. Vorrichtung nach Anspruch 6, dadurch gekennzeichnet, daß ausgangsseitig der Einrichtung (6) zur Bildung des Leistungsspektrums ($S = I^2 + Q^2$) ein Abzweigungspunkt (b) des Detektionskanals (1) vorgesehen ist, an den eine Serienschaltung aus Einrichtungen (18, 19, 20) zur Symmetrierung des Leistungsspektrums, zur Maximalwertsuche (Max) und zur Skalierung ([1/Max]) angeschlossen sind, wobei das Ausgangssignal (B) der Serienschaltung das vom Detektionskanal (1) abgeleitete Eingangssignal der Verknüpfungseinrichtung (15) bildet.

8. Vorrichtung nach Anspruch 7, dadurch gekennzeichnet, daß zwischen der Einrichtung (6) zur Bildung des Leistungsspektrums ($S = I^2 + Q^2$) und dem Abzweigungspunkt (b) eine Integrationseinrichtung

$$(SI(n) = \sum_{i=1}^{n} S(i))$$

angeordnet ist.

9. Vorrichtung nach einem der Ansprüche 6 bis 8, dadurch gekennzeichnet, daß der ersten Einrichtung (5) zur Fast-Fourier-Transformation (FFT) eine Einrichtung (4) zur Beaufschlagung mit einer spektrale Nebenzipfel reduzierenden Wichtungsfunktion vorgeschaltet ist.

10. Vorrichtung nach einem der Ansprüche 6 bis 9, dadurch gekennzeichnet, daß der Verknüpfungseinrichtung (15) eine Einrichtung (16) zur inversen Fast-Fourier-Transformation (IFFT) nachgeschaltet ist.

11. Vorrichtung nach Anspruch 10, dadurch gekennzeichnet, daß der zweiten Einrichtung (14) zur Fast-Fourier-Transformation (FFT) ein erster Wechselpufferspeicher (13) vorgeschaltet und der Einrichtung (16) zur inversen Fast-Fourier-Transformation (IFFT) ein zweiter Wechselpufferspeicher (17) nachgeschaltet ist.

Fig.1

analoges Video-signal

Q
I

3 A/D-Converter

9

4 Wichtungsfunktion

5 FFT

6 Leistungsspektrum $S=I^2+Q^2$

7 Nachintegration $SI(n)=\sum\limits_{i=n-k+1}^{n} S(i)$

1

(b)

8

Ziel-anzeige

10 $|H(f)|$

(a)

11 D/A-Converter

12

akustische Ausgabe

2

EP 0 892 279 A2

6

integriertes
Leistungsspektrum

(b)

Symmetrierung
des
Leistungsspektrums ─ 18

suche
Maximalwert ─ 19
(Max)

Fig.2

Skalierung ─ 20

$\cdot \left[\dfrac{1}{Max}\right]$

Hörtorsignal

(a)

13

14

FFT

15

IFFT

16

17

verbessertes
Dopplersignal
(c) zum D/A-Converter

EP 0 892 279 A2

Fig.3